# EUROPEAN PATENT APPLICATION

(11) **EP 1 798 522 A1**
(43) Date of publication of application: **20.06.2007**
(21) Application number: 06126062.6
(22) Date of filing: 13.12.2006
(51) Int. Cl.: G01C 21/36

(54) **Information display apparatus, information display method, and computer product**

(30) Priority: 14.12.2005 JP 2005360496
(71) Applicant: Pioneer Corporation, Tokyo 153-8654 (JP); Pioneer Design Corporation, Meguro-ku, Tokyo 153-8654 (JP)
(72) Inventor: Hirayama, Naofumi, Meguro-ku Tokyo 153-8654 (JP)
(74) Representative: Haley, Stephen

(57) **Abstract**

In an information display apparatus (100), an identifying unit (103) identifies a street along which a moving object is moving based on a real-time position of the moving object detected by a deLecLing unit (102), and lot numbers assigned along the street. Based on a distance of an area corresponding to the lot numbers and on the real-time position, a calculating unit (104) calculates a lot number of a vicinity of the real-time position. A display unit (106) displays the street. A display control unit (105) controls the display unit (106) to display the lot number of the vicinity and information related to lot numbers corresponding to neighboring addresses of the vicinity, corresponding to a change of the real-time position.

## Description

The present invention relates to a technology of displaying information, and more particularly to a technology for displaying information to guide a moving object.

Conventionally, there are navigation apparatuses that display information indicating a current geographic position of a user on a display screen, and provide route guidance to a destination on the display screen if a destination has been entered. For regions where lot numbers are assigned according a district-based method, this type of navigation apparatus displays on the display screen, the names of areas, road intersections, etc. near the geographic position of the user. For regions where lot umbers are assigned according to a road-based method, the name of a street along which the user is traveling is displayed.

The district based method of address assignment, such as 1 CHOME 1 BANCHI, is an assignment of lot numbers according to a territorial division and is adopted in Japan. The road based method of address assignment is an assignment of lot numbers according to roadways, streets and other such throughways, wherein addresses are assigned in ascending (or descending) order along a street. This method is adopted, for example, in Europe, the United states, and China.

Further, conventionally, for example, there are navigation apparatuses for motor vehicles that read selected street data relevant to a user-entered street name, obtain a scaled representation able to depict the entire length of the street and based on this representation, graphically display the street and the surrounding vicinity in a guidance window (refer to patent document 1 below for an example).

Conventionally, for example, there are also navigation apparatuses that search a route for a user-entered destination, provide route guidance according to the route, and include a means to store road name data, a means to retrieve the stored road name data, and a means to change the retrieved road name by operator control (for example, Japanese Patent Application Laid-Open Publication No. H09-212086 and Japanese Patent Application Laid-Open Publication No. 2004-85577).

With the abovementioned conventional navigation apparatuses in a region having road-based lot number assignments, although a user can know the name of the street currently traveling along, arrangement of lot numbers along the street is unknown. Hence, such a problem that a driver may have difficulty determining the direction of traveling along the street has been raised as one example. Accordingly, another example of a problem that has been raised that the driver becomes anxious as the driver does not know whether the driver traveling toward or away from the destination.

At the same time, navigation apparatuses are instruments for installation in motor vehicles and as such have screen size limitations. Hence, if the lot numbers along a street are displayed on the display screen, a large quantity of lot numbers would be displayed in the limited space of the display screen, thereby making it all the more difficult for a driver to see in which direction the driver is traveling, let alone the position thereof. This issue has been raised as an example of a problem. Moreover, if many lot numbers are displayed on a limited display screen, in order to find particular information, the driver must look intently at the display screen, which interferes with his driving. This issue has also been raised as an example of a problem.

Furthermore, another issue has been raise as an example of a problem, that by setting a destination in a navigation apparatus and then following the route guidance, a driver is able to grasp the traveling direction. However, if a driver sets a destination while driving, the driver must look at the operation panel, thereby interfering with the driving.

Additionally, another example of a problem that has been raised with the technology in patent document 1 is the nuisance of having to enter a street name every time a driver wants a particular street to be displayed. Yet, another example of a problem that has been raised with the technology in patent document 2 is the nuisance of having to enter a destination in order for the street names to appear.

It is an object of the present invention to at least solve the above problems in the conventional technologies.

An information display apparatus according to one aspect of the present invention includes a detecting unit that detects a real-time position of a moving object; an identifying unit that identifies a street upon which the moving object is moving and a plurality of lot numbers assigned along the street, based on the real-time position; and a display control unit that controls a display unit to display a name of the street, and to display, corresponding to a change of the real-time position, a vicinity lot number that is a lot number corresponding to a vicinity of the real-time position among the lot numbers, and information related to neighboring lot numbers that include a lot number preceding the vicinity lot number and a lot number following the vicinity lot number among the lot numbers.

An information display apparatus according to another aspect of the present invention includes a detecting unit that detects a real-time position of a moving object; an identifying unit that identifies a street upon which the moving object is moving based on the real-time position; a calculating unit that calculates a vicinity lot number that is a lot number corresponding to a vicinity of the real-time position based on a distance from a reference point on the street to the real-time position; and a display control unit that controls a display unit to display a name of the street, and to display, corresponding to a change of the real-time position, the vicinity lot number and information related to neighboring lot numbers that include a lot number preceding the vicinity lot number and a lot number following the vicinity lot number.

An information display method according to still another aspect of the present invention includes detecting a real-time position of a moving object; identifying a street upon which the moving object is moving and a plurality of lot numbers assigned along the street, based on the real-time position; displaying a name of the street; and displaying a vicinity lot number that is a lot number corresponding to a vicinity of the real-time position among the lot numbers, and information related to neighboring lot numbers that includes a lot number preceding the vicinity lot number and a lot number following the vicinity lot number among the lot numbers, corresponding to a change of the real-time position.

An information display method according to still another aspect of the present invention includes detecting a real-time position of a moving object; identifying a street upon which the moving object is moving based on the real-time position; calculating a vicinity lot number that is a lot number corresponding to a vicinity of the real-time position based on a distance from a reference point on the street to the real-time position; displaying a name of the street; and displaying the vicinity lot number and information related to neighboring lot numbers that include a lot number preceding the vicinity lot number and a lot number following the vicinity lot number, corresponding to a change of the real-time position.

An information display program according to still another aspect of the present invention causes a computer to execute the information display method according to the above aspect.

A computer-readable recording medium according to still another aspect of the present invention stores the program according to the above aspect.

The other objects, features, and advantages of the present invention are specifically set forth in or will become apparent from the following detailed description of the invention when read in conjunction with the accompanying drawings.
Fig. 1 is a block diagram of an information display apparatus according to an embodiment of the present invention;
Fig. 2 is a flowchart of an information processing performed by the information display apparatus;
Fig. 3 is a block diagram of a navigation apparatus according to an example;
Fig. 4 is a flowchart of a processing performed by the navigation apparatus according to the example;
Fig. 5 is a diagram (Part 1) describing a method of calculating a lot number of a vicinity of a real-time position;
Fig. 6 is a diagram (Part 2) describing a method of calculating a lot number of a vicinity of a real-time position;
Fig. 7 is a screen example (Part 1) illustrating one example of a display screen;
Fig. 8 is a screen example (Part 2) illustrating one example of the display screen;
Fig. 9 is a screen example (Part 3) illustrating one example of the display screen;
Fig. 10 is a screen example (Part 4) illustrating one example of the display screen;
Fig. 11 is a screen example (Part 5) illustrating one example of the display screen; and
Fig. 12 is a screen example (Part 6) illustrating one example of the display screen.

Exemplary embodiments of an information display apparatus, an information display method, am information display program, and a recording medium according to the present invention are explained in detail below with reference to the accompanying drawings. The information display apparatus according to the present embodiment is portable and can be loaded on a moving object, i.e., an entity that has the power of locomotion, for example, a vehicle, a marine vessel, or a person.

An information display apparatus according to the exemplary embodiment, for example, may be a portable computer terminal that is transportable on a moving object. Specifically, for example, in the case of the moving object being a vehicle, the information display apparatus may be a navigation apparatus that is loaded on the vehicle; in the case of a person, the information display apparatus may be a mobile phone, a personal digital assistant (PDA), or any other similar device.

### (Functional Configuration of an Information Display Apparatus)

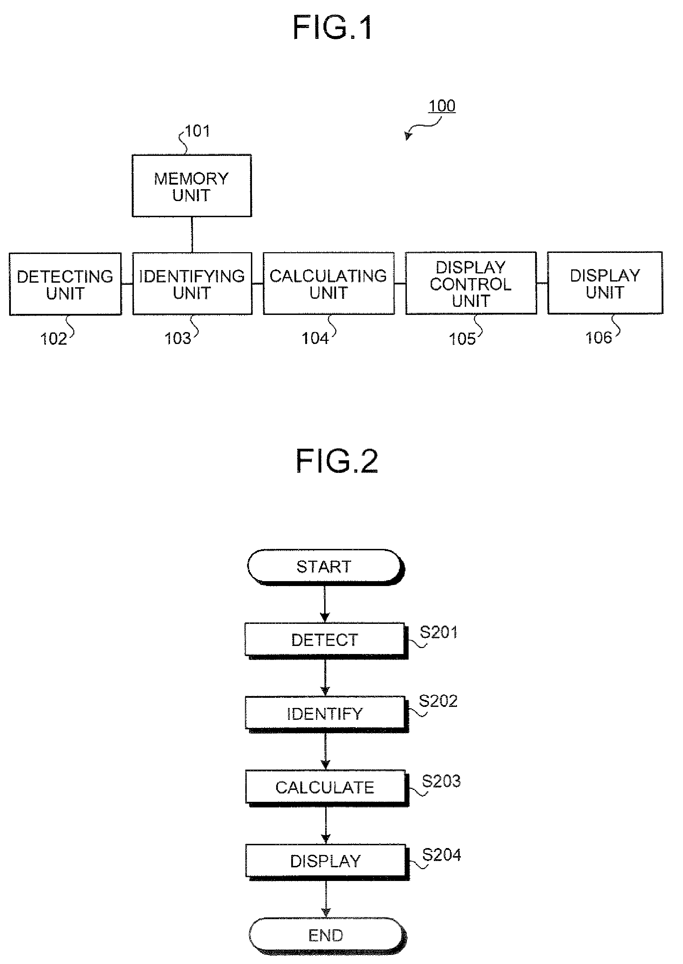

Next, a functional configuration of an information display apparatus according to the exemplary embodiment is described. Fig. 1 is a block diagram of a functional configuration of an information display apparatus. In Fig. 1, an information display apparatus 100 includes a memory unit 101, a detecting unit 102, an identifying unit 103, a calculating unit 104, a display control unit 105, and a display unit 106.

The memory unit 101 stores information related to a street name and lot number group along the street. Street related information includes information that designates street name, street location, length (distance), and shape among other characteristics. Information related to lot number group along a street is information that designates a plurality of lot numbers. Information related to lot number group may also be information that designates all lot numbers along the street, specific lot numbers along the street, such as those corresponding to intersections, major establishments and facilities, and any other identifiable points. On the contrary, the memory unit 101 may only store street related information.

The detecting unit 102 detects a real-time geographic position for a moving object. The real-time position of the moving object, for example, can be detected by reception of a global positioning system (GPS) signal from a GPS satellite. Furthermore, for example, in the case of the information display apparatus 100 being loaded on a vehicle, the output value from an acceleration sensor, a speedometer, or any other such instrument for monitoring the behavior of a vehicle may be used to detect a real-time position for the moving object. The detecting unit 102 may also detect the real-time position of a moving object when movement of the moving object exceeds a given distance, or by a particular timing.

Further, the identifying unit 103 identifies a street along which a moving object is moving based on the real-time position detected by the detector unit 102 and also identifies lot number group along the street. For example, the identifying unit 103, utilizing information that is stored by the memory unit 101 designating the location of the street, identifies the street that includes the real-time position detected by the detecting unit 102.

The identifying unit 103 identifies a lot number group along the identified street from among the lot number group stored by the memory unit 101. The identifying unit 103 may only identify the street. For example, if the information stored by the memory unit 101 is only street-related information, the identifying unit 103 would only identify the street.

The calculating unit 104, based on a distance within a lot number group and on a real-time position that are identified by the identifying unit 103, calculates a lot number of a vicinity of a real-time position falling between the identified lot number group. The calculating unit 104, for example, calculates a lot number of a vicinity of a real-time position based on the distance between two lot numbers that sandwich a real-time position and on the real-time position. Specifically, for example, the distance between two lot numbers is divided into a plurality of zones; upon the real-time position being included among any of the divided zones, a lot number of a vicinity is calculated.

In the event the abovementioned identifying unit 103 only identifies a street, the calculating unit 104 calculates a lot number of a vicinity based on the distance from a predetermined reference point for the street identified by the identifying unit 103 to the real-time position. Here, the predetermined reference point is, for example, an end of the street, an open space such as a square, plaza and any other points where similarly identifiable structures and facilities exist. The distance from the predetermined reference point to the real-time position is the distance along one street that connects the predetermined reference point and the real-time position, and in the event that a street other than the identified street is to be taken, such as a detour, the distance thereof is not included in the calculation.

Upon calculation of the lot number of a vicinity, the calculating unit 104, based on street related information stored in the memory unit 101, first calculates the distance from the predetermined reference point to the real-time position. Next, based on the calculated distance, according to previously set conditions, the lot number of a vicinity of the real-time position is calculated. Here, previously set conditions are information that correlates a distance from the predetermined point and the lot number.

The correlation between a distance from the predetermined point and a lot number may be set, for example, such that for every one meter from the predetermined reference point, the lot number increases by one unit. In this case, specifically, for example, if the real-time position is at a distance of 5 kilometers (5000 meters) from the predetermined reference point, the lot number is calculated as 5000.

Regarding the calculating unit 104, when calculating a lot number of a vicinity of the real-time position, the precision of the calculation may vary according to the scale of a map displayed on the display screen of the display unit 106. Specifically, for example, if the scale of a map displayed on the display screen is 1/3000, the lot number of a vicinity is calculated as a value that correctly designates the lot number, such as "1023". Whereas, for example, if the scale of a map that is displayed on the display screen is 1/24000 and the exact lot number should be "1023", the lot number of the vicinity is calculated as "1000", a value rounded to the nearest 100th place.

Further, the display control unit 105 controls the display unit 106 to display, on the display screen of the display unit 106, the name of the street identified by the identifying unit 103 together with a lot number of a vicinity from the lot number group identified by the identifying unit 103, and information related to lot numbers preceding and following the lot number, following the real-time position. Here, a vicinity of the real-time position is an area of a predetermined size that includes the real-time position.

Furthermore, the display control unit 105 does not have to display all of the information related to the lot number of a vicinity of the real-time position and related to the lot numbers preceding and following the lot number, but may display any two of the following three types of information, a lot number of a vicinity of the real-time position; information related to lot numbers with numeric values less than that of the lot number of the vicinity; and information related to lot numbers with numeric values greater than that of the lot number of the vicinity. Specifically, the display control unit 105, for example, displays a lot number of a vicinity of the real-time position and information related to a lot number of either one of a lot number that precedes and a lot number that follows the lot number, on the display screen.

In addition, the lot number of a vicinity of the real-time position is the lot number corresponding to a point nearest the real-time position amongst the lot numbers along the street, for example, for a given 100 meter radius encompassing the real-time position, of the lot numbers along the identified street, the lot number of the vicinity is the lot number in closest proximity to the real-time position. A lot number and information related to lot numbers preceding and following the lot number that are to be displayed on the display screen continually vary according to the movement of the moving object.

Information related to the lot numbers preceding and following the lot number of a vicinity of the real-time position are, for example, lot numbers that precede and that follow the lot number of the vicinity. Specifically, for example, if the lot number of the real-time position is "10", then the lot numbers that precede and follow the lot numbers, "9" and "11", respectively are displayed on the display screen. However, the lot numbers preceding and following the lot number of a vicinity of the real-time position are not limited to the numeric values that immediately precede and follow the lot number of the vicinity. For example, when the lot number of the vicinity is "10", "5" and "15" may be the lot numbers that precede and follow the lot number of the vicinity.

Furthermore, regarding information related to the lot numbers preceding and following the lot number of the vicinity, a graphic representation or a symbol indicating increase or decrease in the numeric value relative to the lot number of the vicinity may be employed. Specifically, for example, increase and decrease can be designated by the use of symbols such as, "+" and "-". Alternatively, for example, a real-time position on a street may be designated by a position on a scale that indicates both ends of the street.

Upon calculation of a lot number of a vicinity by the calculating unit 104, the display control unit 105 controls the display unit 106 to display the street name on the display screen, and following the real-time position, displays the lot number of the vicinity calculated by the calculating unit 104 and information related to the lot numbers that precede and follow the calculated lot number.

The display control unit 105 may control to vary the lot numbers to be displayed that precede and follow the calculated lot number based on the scale of the map displayed on the display screen. For example, if the scale of a map displayed on the display screen is 1/3000 and the lot number that immediately precedes or follows the lot number of a vicinity of the real-time position is displayed; whereas, if the scale is 1/24000, the numeric value at a predetermined distance away from the lot number of the vicinity is displayed as the lot numbers that precede and follow the lot number of the vicinity of the real-time position.

Specifically, for example, if the scale of a map displayed on the display screen is 1/3000 and a lot number of a vicinity of the real-time position is "1000", the lot number preceding and the lot number following the lot number the vicinity is displayed as "999" and "1001", respectively; whereas, if the map scale is 1/24000 and a lot number of the vicinity is "1000", the lot number preceding and the lot number following the lot number of the vicinity is displayed as "900" and "1100", respectively.

The display control unit 105 may control to vary the precision of the lot number of the vicinity to be displayed on the display screen, corresponding to the scale of the map displayed on the display screen. In addition, when the precision of the lot number of the vicinity to be displayed on the display screen is varied corresponding to the map scale, the precision of a lot number, if calculation precision of each lot number is reduced, in order to inform that it is an approximate lot number, a different way of display may be adopted from a case in which an exact lot number is displayed. Specifically, in the event that the exact lot number is "1023", the approximate lot number may be displayed as "(1000)" in parenthesis.

The display control unit 105 may control to vary the updating frequency of the lot number of the vicinity and information related thereto displayed on the display screen, according to the traveling speed of the moving object. The frequency of updating information displayed on the display screen is at a level that can be visually observed. Specifically, for example, in the event that the moving object is moving at a slow speed having a walking pace level, according to variations in the lot number of the vicinity, the information displayed on the display screen may be updated. On the contrary, in the event that the moving object is moving at a speed of ten kilometers per hour or greater, as the moving object travels a predetermined distance, the information displayed on the display screen may be updated.

The display control unit 105 may also control to display a lot number of a vicinity of the real-time position and information related to lot numbers precedes and following the lot number all the time, or only upon receipt of instruction by means of an input device not shown.

Furthermore, the display unit 106 has a display screen that displays particular information. The display unit 106 is controlled by the display control unit 105 and displays the name of a street identified by the identifying unit 103, a lot number of a vicinity of a real-time position, and information related to lot numbers preceding and following the lot number. Moreover, the display unit 106, for example, may also display map information for the surrounding area of a real-time position on the display screen.

An information processing method for the information display apparatus 100 according to the embodiment is described. Fig. 2 is a flowchart illustrating an information processing performed by the information display apparatus 100 according to the embodiment. A shown in Fig. 2, first, a real-time position of a moving object is detected by the detecting unit 102 (step S201).

Next, according to the real-time position detected in step S201, a street along which the moving object is traveling and a lot number group along the street are identified by the identifying unit 103 (step S202). Based on the distance within the identified lot number group and on the real-time position, a lot number of a vicinity of the real-time position between the identified lot number group is calculated (step S203).

Then, through the control of the display control unit 105, the display unit 106 displays the name of the identified street from step S202, and of the identified lot number group from step S202, the calculated lot number of the vicinity of the real-time position and information related to lot numbers preceding and following the lot number are displayed, following the real-time position (step S204) and a processing series is completed.

As mentioned above, the information display apparatus 100 according to the embodiment enables a name of a street along which a moving object is traveling, a lot number of a vicinity of a real-time position of the moving object, and information related to lot numbers preceding and following the lot number, following the real-time position to be displayed.

Hence, even when no destination has been entered, the information display apparatus 100 can display a sequence of lot numbers along a street in an easy to understand manner in regions having lot numbers assigned according to the road-based method. As such, with peace of mind, a user can travel about a region having road-based address assignments. Furthermore, in the event that the moving object is a vehicle, a driver of the vehicle can safely operate the vehicle with peace of mind.

Namely, the information display apparatus 100 according to the embodiment enables a driver to reach a destination without anxiety. Furthermore, distractions that interfere with driver concentration during vehicle operation, such as gazing at a display screen or manipulation of the navigation apparatus, can be reduced, thereby contributing to safer driving.

Also, the information display apparatus 100 according to the embodiment enables a name of a street along which a moving object is traveling, a lot number of a vicinity of the real-time position that is calculated based on the distance within lot number group, a real-time position, and information related to lot numbers preceding and following the lot number to be displayed on a display screen, following the real-time position.

Accordingly, compared to a case in which information to designate all lot number groups along a street are recorded, the information display apparatus 100 reduces the required capacity of a recording medium for information that designates lot number groups along a street, while displaying a sequence of lot numbers along a street in a manner that is easy to understand. As such, independent of the capacity of the recording medium, a user is able to travel about a region having road-based address assignments with peace of mind. Moreover, in the event the moving object is a vehicle, a driver can safely operate the vehicle with peace of mind.

Further, the information display apparatus 100 according to the embodiment enables a name of a street along which the moving object is traveling, a lot number that calculated is based on a distance from a predetermined reference point to a real-time position, and information related to lot numbers that precede and follow the lot number to be displayed on a display screen, following a real-time position of a moving object,

Hence, without provision of a recording medium for recording information that designates lot number group along a street, the information display apparatus 100 is able to display a sequence of lot numbers along a street in an easy to understand manner. Therefore, the display of information is independent of the capacity of the recording medium, and a user can navigate with peace of mind a region having road-based address assignments. Further, in the event the moving object is a vehicle, a driver can safely operate the vehicle with peace of mind.

Furthermore, the information display apparatus 100 according to the embodiment enables lot numbers preceding and following a lot number of a vicinity of a real-time position to be displayed as information related to the lot numbers preceding and following a lot number of a vicinity of a real-time position. As such, for a region having road-based address assignments, the information display apparatus 100 can display an easy to understand sequence of lot numbers along a street even when no destination has been entered.

Consequently, a user can navigate a region having road-based address assignments with peace of mind. Furthermore, in the event the moving object is a vehicle, a driver can safely operate the vehicle with peace of mind.

Moreover, the information display apparatus 100 according to the embodiment enables a graphic or symbolic display of increase and decrease in the numeric value of a lot number relative to a lot number of a vicinity of the real-time position as information related to lot numbers preceding and following the lot number. Consequently, even when no destination is entered, the information display apparatus 100 can display an easy to understand sequence of lot numbers along a street in a region having road-based address assignments.

As such, a user intuitively knows the sequence of lot numbers along a street in a region having road-based address assignments and can travel with peace of mind. Furthermore, in the event the moving object is a vehicle, a driver can safely operate the vehicle with peace of mind.

Next, an example of the aforementioned embodiment is described, wherein the information display apparatus 100 according to the embodiment is applied as a navigation apparatus mounted to a vehicle.

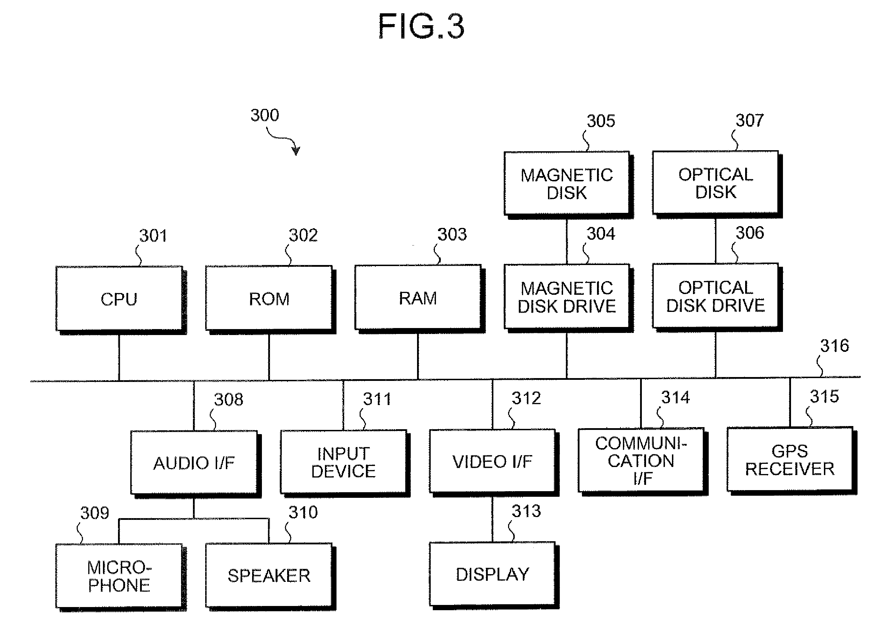

First, an example of a hardware configuration for a navigation apparatus is described. Fig. 3 is a block diagram of a hardware configuration of a navigation apparatus. As shown in Fig. 3, a navigation apparatus 300 includes a central processing unit (CPU) 301, a read only memory (ROM) 302, a random-access memory (RAM) 303, a magnetic disk drive 304, a magnetic disk 305, an optical disk drive 306, an optical disk 307, an audio interface (I/F) 308, a microphone 309, a speaker 310, an input device 311, a video I/F 312, a display 313, a communication I/F 314, and a GPS receiver 315. Further, each component 301 to 315 is connected by a bus 316.

First, the CPU 301 governs control of the entire navigation apparatus 300. The ROM 302 stores programs, such as a boot program, a route search program, a route guidance program, and a display program. The RAM 303 is used as the work area of the CPU 301. The route search program, upon execution by the CPU 301, for example, is a program that searches a route passing through a first point and a second point designated by a user of the navigation apparatus 300. The first and the second points, for example, are a starting point and a destination point.

The route guidance program, executed by the CPU 301, is a program that guides a user along a guided route by outputting information based on a certain timing corresponding to the user of the navigation apparatus 300. A guided route, for example, is a route designated by the route search program, or a route specified by the user, etc.

Furthermore, the display program, executed by the CPU 301, initiates detection of a real-time position of a vehicle in which the navigation apparatus 300 is equipped, identification of a street along which the vehicle is traveling and a lot number group along the street according to the real-time position for the vehicle, and display of the name of the identified street on the display 313. Besides, the display program initiates display of a lot number of a vicinity of the real-time position (hereinafter, "real-time position") of the vehicle (the navigation apparatus 300) from the identified lot number group, and information related to lot numbers preceding and following the lot number, following the real-time position on the display 313.

The display program initiates calculation of a lot number of a vicinity of the real-time position in the identified lot number group based on the distance within identified lot number group and on a real-time position of the vehicle; display of the street name on the display 313; and display of the calculated lot number of a vicinity of the real-time position and information related to lot numbers preceding and following the lot number on the display 313, following the real-time position.

The display program initiates detection of a real-time position of the vehicle; identification of the street along which the vehicle is traveling; calculation of a lot number of a vicinity of the real-time position based on a distance from a reference point on the identified street to the real-time position; display of the street name on the display 313; and display of the calculated lot number of a vicinity of the real-time position and information related to lot numbers preceding and following the lot number on the display 313 following the real-time position.

Moreover, the magnetic disk drive 304 controls the reading/writing of data for the magnetic disk 305 according to the instructions of the CPU 301. The magnetic disk 305 stores written data by the control of the magnetic disk drive 304. Specifically, the magnetic disk drive 304 records, for example map information, on the magnetic disk 305. A hard disk (HD), flexible disk (FD), etc. can be used as the magnetic disk drive 304.

Furthermore, the optical disk drive 306 controls the reading/writing of data for the optical disk 307 according to the instructions of the CPU 301. The optical disk 307 is a removable recording medium that retrieves data according to instructions by the optical disk drive 306. Map information is stored on the optical disk 307.

Map information is information that represents nodes and links forming road networks, and includes features representing facilities, streets, geographical features (mountains, rivers, and land terrain), etc., and textual information, etc. representing facility and street names, etc. Information representing lot numbers along a street is also included. Information representing lot numbers indicates lot numbers of intersections along a street.

For example, at the intersection of a crossing of two streets, lot numbers of four corners are indicated. At a T-intersection where one of the streets and another street protruding therefrom, lot numbers of two corners may be indicated. Map information may also include information representing all lot numbers along a street. Information representing lot numbers may be excluded depending on a country or a region. As an example of map information in which information representing lot numbers, map information of countries such as Italy is included where lot numbers are assigned based on a distance from a particular reference point.

Map information, for example, is used for route searches and route guidance. The optical disk 307 may utilize a magneto-optical disk (MO), memory card or any other such removable recording media. Furthermore, writable recording media can also be utilized.

Further, the audio I/F 308 is connected to the microphone 309 for audio input and the speaker 310 for audio output. The sound received by the microphone 309 is converted from an analog signal into a digital signal within the audio I/F 308. Furthermore, the sound is output from the speaker 310. In addition, the input device 311 may be a remote control unit, a key board, a mouse, a touch panel, etc. provided with a plurality of keys for input of text, numeric values, and various commands.

Moreover, the video I/F 312 is connected to the display 313. Specifically, the video I/F 312, for example, includes a graphic controller that governs control over the entire display 313, a buffered (i.e., registered) memory such as video RAM (VRAM) which temporarily stores graphic information that can be instantaneously displayed, a control integrated circuit (IC) that controls the display 313 based on graphic data output by the graphic controller.

In addition to the aforementioned map information, traffic conditions, a guide route, etc. can be displayed in layers on the display 313. On the display 313, an icon, a cursor, a menu, etc. may also be displayed. This display 313, for example, can employ a cathode ray tube (CRT), thin-film transistor liquid crystal display (TFT LCD), plasma display panel (PDP), etc.

Further, the communication I/F 314 is connected wirelessly or by a communications cable to a network and functions as an interface between this network and the CPU 301. Within the network is a local area network (LAN), a wide area network (WAN), a public telephone line network, a cellular telephone network, etc. The communication I/F 314, for example, includes an FM tuner, VICS (a registered trademark for "vehicle information and communication system)/beacon receiver, a wireless communications device, and other wireless communication devices; and obtains traffic conditions, traffic regulations, among other road and traffic information that is delivered by the VICS center.

In addition, the GPS receiver 315, employing GPS and output values from various sensors, obtains information indicating a real-time position of a vehicle (a real-time position of the navigation apparatus 300). The navigation apparatus 300 includes a gyro sensor and an input I/F (both omitted from figure) into which output values from the gyro sensor, a vehicle speed pulse, etc. are input. The CPU 301 determines the direction of movement of a vehicle (if vehicle is in stationary position, determines direction in which vehicle is facing) from the output value of the gyro sensor.

In addition, functions of the detecting unit 102, the identifying unit 103, the calculating unit 104, the display control unit 105, the display unit 106 of the information display apparatus 100 illustrated in Fig. 1 are realized by the use of program data stored on the ROM 302, the RAM 303, the magnetic disk 305, the optical disk 307, etc. of the navigation apparatus 300 in Fig. 3, the execution of certain programs by the CPU 301, and the control of the components of the navigation apparatus 300.

Namely, the navigation apparatus 300 of this example of can realize the function of the information display apparatus 100 illustrated in Fig. 1 by the display program stored on the recording medium therein, and the information processing protocol illustrated in Fig. 2.

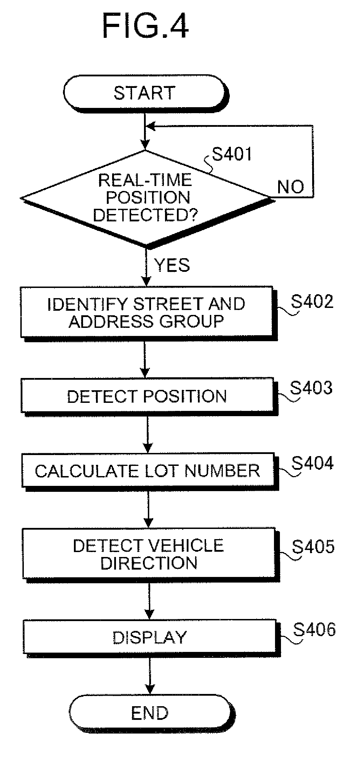

Next, a processing method of the navigation apparatus 300 according to the example is described. Fig. 4 is a flowchart illustrating a processing by the navigation apparatus 300. As shown in Fig. 4, first, detection of a real-time position of a vehicle is waited for (step S401: NO). Upon detection (step S401: YES), corresponding the real-time position for the vehicle, a street along which the vehicle is traveling is identified including a lot number group along the street (step 402).

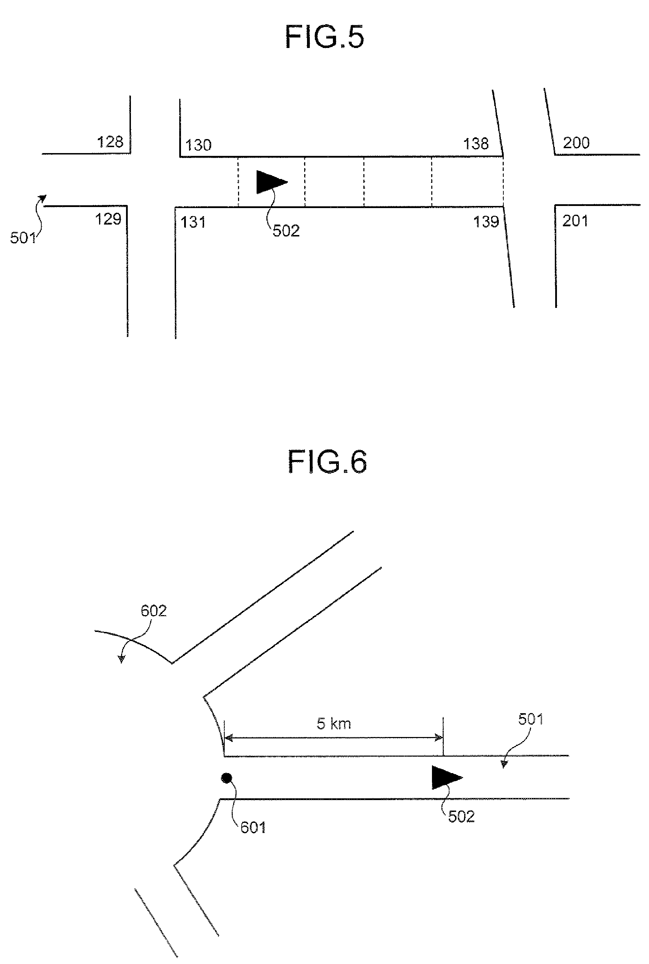

Next, from the lot number group identified at step 402, two points sandwiching the real-time position detected at step 401 are detected (step 403). At step 403, two points along one side of the street may be detected; two points along both sides of the street may be detected. Then, utilizing lot numbers for the two points, a distance between the two points, and the real-time position, a lot number of a vicinity of the real-time position is calculated (step 404). A method of calculating the log number of a vicinity of the real-time position is described later at step 404 (refer to Fig. 5, Fig. 6).

Next, from a value output by the gyro sensor, a direction of the vehicle is detected (step 405). Then, according to the direction of the vehicle, the name of the street identified at step 402 is displayed; and the lot number of a vicinity of the real-time position calculated at step 404 from the lot number group identified at step 402 and information related to lot numbers preceding and following the lot number are displayed on the display 313 following the real-time position, thereby completing a series of processing steps.

At step 405, information related to lot numbers located forward in the traveling direction of the vehicle is displayed in an upper portion of the display 313 relative to the lot number of a vicinity of the real-time position and information related to lot numbers already passed by the vehicle is displayed in the lower portion of the display 313 than the position of the lot number of a vicinity of the real-time position. As the lot number of a vicinity of the real-time position and information related to lot numbers preceding and following the lot number, lot numbers on both sides of the street or lot numbers on any one side may be displayed.

Next, a method for calculating a lot number of a vicinity of the real-time position at step 404 shown in Fig. 4 is described. Fig. 5 is a diagram (Part 1) describing a method of calculating a lot number of a vicinity of the real-time position. In Fig. 5, a reference character 501 is a street along which a vehicle is traveling, and a reference character 502 is a symbol representing a real-time position of a vehicle (the navigation apparatus 300).

The digits "129", "130", etc. on both sides of the street 501 are lot number group indicating lot numbers of an intersection in the lot number group along the street 501. In addition, lot numbers assigned according to street are assigned such that even numbers are along one side of the street and odd numbers are along the other.

If a real-time position of a vehicle is as illustrated in Fig. 5, lot numbers "130" and "138" are detected as two points between which the real-time position lies at step 403 of Fig. 4. Lot numbers "131" and "139" may also be detected. Then, at step 404 of Fig. 4, the distance between the two detected points is divided into five sections and corresponding to the section in which the real-time position lies, a lot number of a vicinity of the real-time position is calculated for convenience. In the case illustrated in Fig. 5, the real-time position is in the second section from the lot number "130", hence, the lot number of the vicinity is calculated as "132". In the event lot numbers "131" and "139" are detected at step 404 of Fig. 4, the lot number of the vicinity is calculated as "133".

Division of the distance between two detected points at step 403 of Fig. 4 is not limited to five sections, and a proper quantity may be set depending on lot numbers of the two detected points. Division of the distance between the two points is not limited to division in uniform distance, and may be division at every predetermined distance. In any case, if the results of the division yield a decimal value or any other inappropriate value for a lot number, the value is corrected to conform to a lot number of a street-based address assignment method.

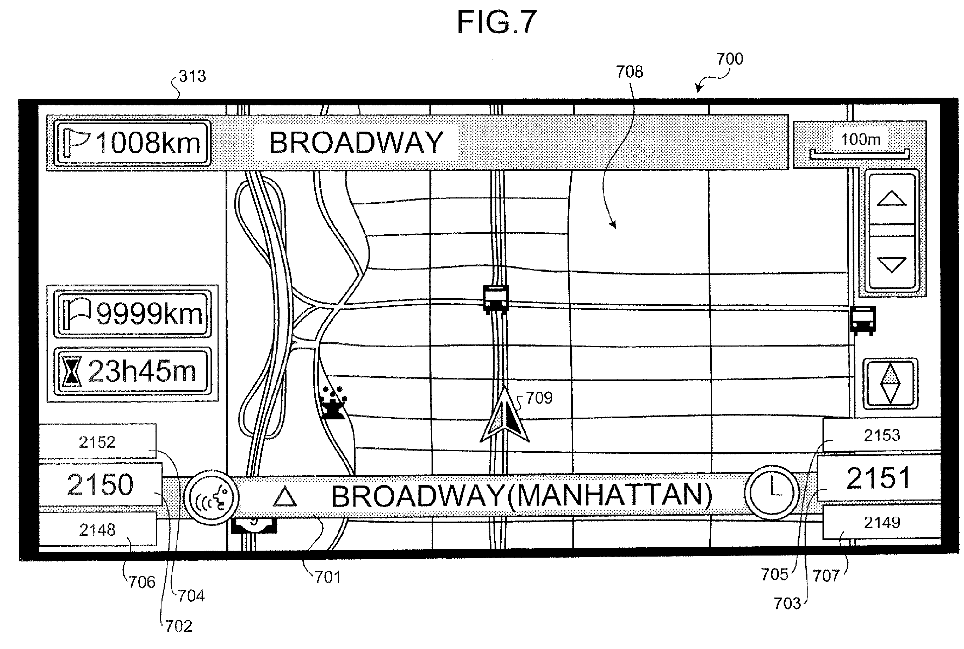

As a result, at step 406 of Fig. 4, "132" is displayed as a lot number of a vicinity of the real-time position. Information regarding lot numbers preceding and following the lot number of the vicinity, for example, may be indicated by lot numbers preceding and following the lot number of the vicinity or a graphic representation or a symbol indicating increase or decrease in the numeric value representing the lot numbers relative to the lot number of the vicinity (refer to Fig. 7 to Fig. 12).

Next, another method of calculating a lot number of a vicinity of the real-time position is described. Here, calculation method of a lot number of a vicinity of the real-time position is described for cases when information indicating a lot number is not included in map information. When lot number information is not included in map information, only the street 501 is identified at step 402 of Fig. 4 and step 403 is omitted.

Fig. 6 is a diagram (Part 2) describing the method of calculating a lot number of a vicinity of the real-time position. In Fig. 6, the same parts are represented by the same reference symbols as those in Fig. 5 and their description is omitted here. In Fig. 6, reference symbol 601 is a reference point related to the street 501. The reference point 601 is a bordering point of a plaza 602 and the street 501. The reference point 601 is not limited to being the aforementioned bordering point; it may represent the center point of the plaza 602. Furthermore, the reference point 601 is not limited to being a point of reference for the plaza 602; it may be a related to a roundabout.

If information indicating a lot number is not included in map information, the distance between the reference point 601 and a real-time position is calculated, and using the result, a lot number of a vicinity of the real-time position is displayed. For example, in the example shown in Fig. 6, a lot number of the vicinity is calculated as "5".

On the contrary, in the event that information indicating all lot numbers along a street is included in map information, of the lot number group identified at step 402, a lot number of a vicinity of the real-time position detected at step 401 is extracted and the process at step 404 of Fig. 4 can be omitted.

Further among the map data stored in the optical disk 307, information indicating increase/decrease in lot numbers may be included in information indicating points on a street. Specifically, map data including information that indicates the lot number increases when a vehicle travels in which direction along a street, and on the contrary, the lot number decreases when the vehicle travels in the opposite direction thereto is stored on the optical disk 307. As such, with identification of a street on which a vehicle is traveling, without any particular calculations, increase or decrease with respect to a lot number of a vicinity of the real-time position can be known. Thus, the load of data processing of the navigation apparatus 300 can be reduced.

Next, a display screen displayed at step 406 in Fig. 4 on the display 313 is discussed. Fig. 7 is a screen example (Part 1) showing one example of a display screen. On a display screen 700, information indicating the name of the street on which a vehicle is traveling (henceforth, simply "name information") 701 is displayed. In the event the real-time position of the vehicle is in a roundabout, the name information 701 displayed is the name of the roundabout.

Further, on the display screen 700, on both sides of the name information 701, information 702, 703 indicating lot numbers of a vicinity of the real-time position (henceforth, "real-time lot number information") is displayed. On the display screen 700, in a position above each of the real-time lot number information 702, 703, information 704, 705 indicating lot numbers positioned forward in the traveling direction with respect to the lot number of the vicinity (hereinafter, "approaching lot number information") is displayed.

At a position below each real-time lot number information 702, 703, information indicating information 706, 707 about passed lot numbers (hereinafter, "passed lot number information") is displayed. On the display screen 700, a map 708 of a vicinity of the real-time position of the vehicle is displayed; and in the map 708, a graphic symbol 709 representing the real-time position of the vehicle is displayed. In the map 708, the street indicated by the name information 701 and a name of an intersecting street (including a street number) are included.

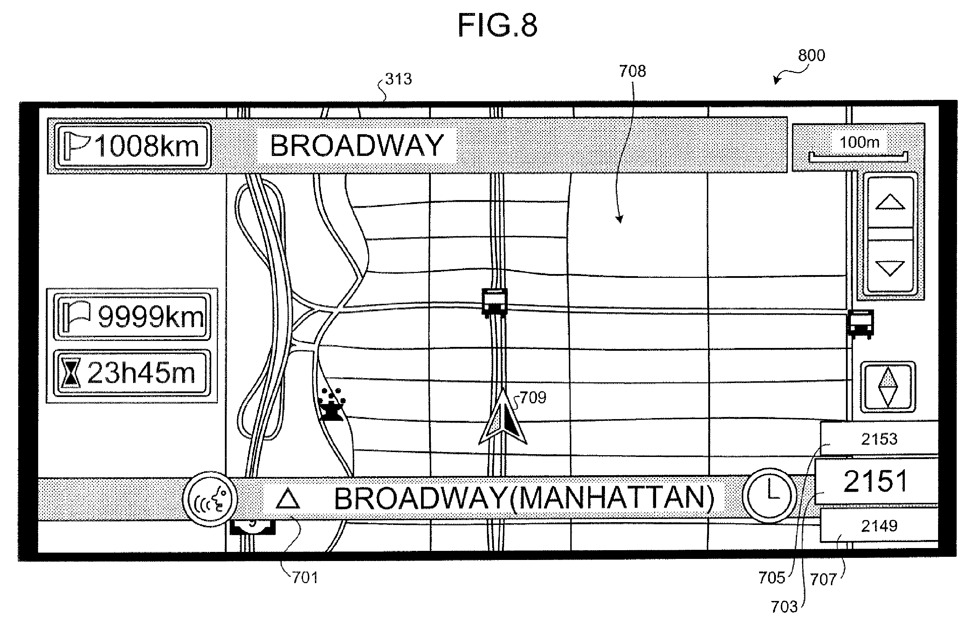

Fig. 8 is a screen example (Part 2) showing one example of the display screen. On a display screen 800, only on the right side of the name information 701, the real-time lot number information 703, the approaching lot number information 705 and the passed lot number information 707 are displayed. The real-time lot number information 702, the approaching lot number information 704 and the passed lot number information 706 may be displayed only on the left side of the name information 701.

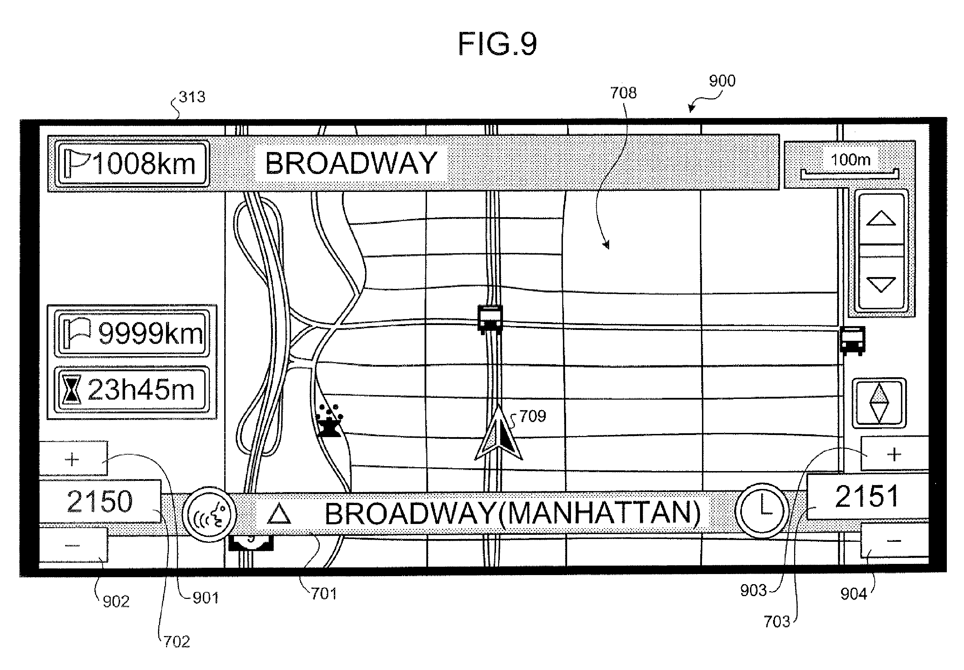

Fig. 9 is a screen example (Part 3) of one example of the display screen. On a display screen 900, symbols 901 to 904 indicating increase and decrease of lot numbers located ahead behind in the traveling direction with respect to the lot number of a vicinity of the real-time position are displayed at portions above and below each real-time lot number information 702, 703.

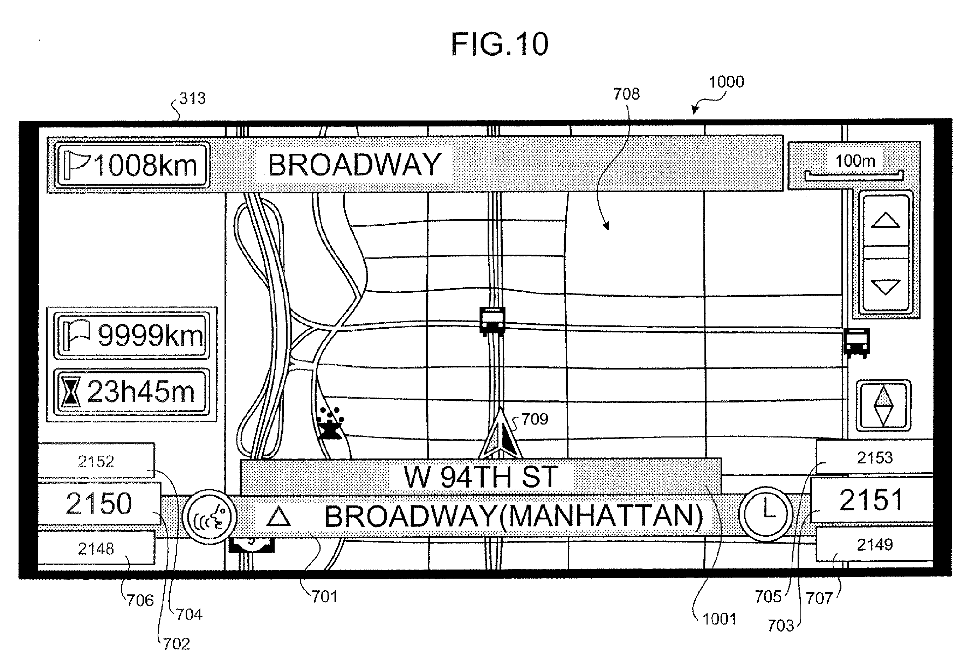

Fig. 10 is a screen example (Part 4) of one example of the display screen. On a display screen 1000, a street indicated by the name information 701, and information 1001 indicating a name of a next intersecting street (hereinafter, "cross street") are displayed. For example, if the real-time position of a vehicle is in a roundabout, the name of the roundabout is displayed as the name information 701 and of the streets connected to the roundabout, the name of the street that the vehicle will next approach is displayed as information 1001 indicating a name of an intersecting street (hereinafter, "cross street information").

On the display screen 1000, although the cross street information 1001 is displayed above the name information 701, a position of display moves corresponding to the movement of the vehicle. Specifically, upon a vehicle approaching an intersection from the street indicated by the name information 701, the name information 701 and the cross street information 1001 overlap, and corresponding to the movement of the vehicle move toward the bottom. If the vehicle proceeds through the intersection, the cross street information 1001 is no longer displayed. If the vehicle turns right (or left) on the cross street, the cross street information 1001 is displayed as the name information 701, and the name information 701 displayed up until this point is no longer displayed.

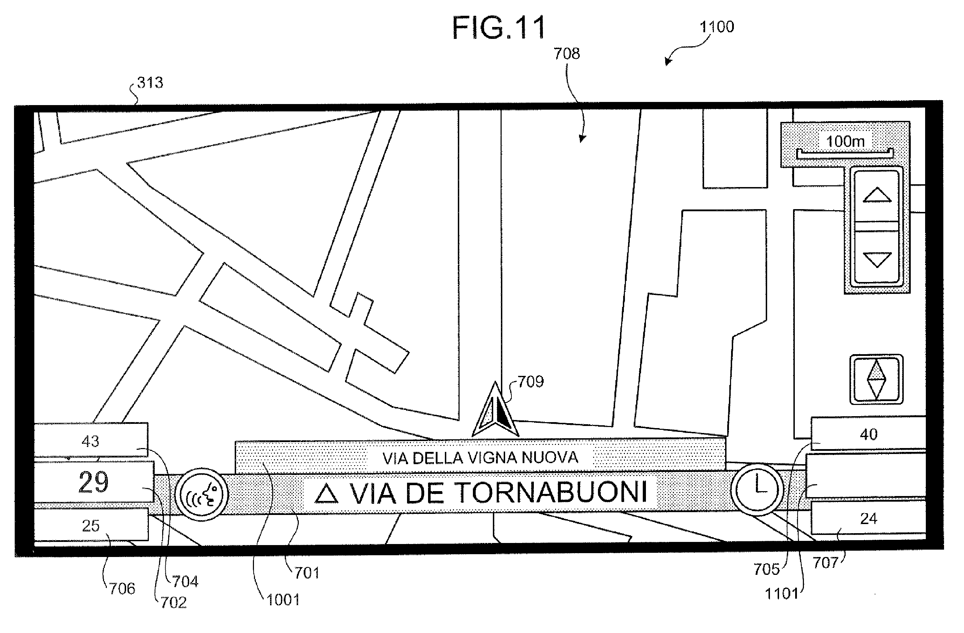

Next, when a lot number of a vicinity of the real-time position is obtained from map information, the display screen of the display 313 is described. Fig. 11 is a screen example (Part 5) of one example of the display screen. A display screen 1100 illustrated in Fig. 11 is displayed when information indicating all of lot numbers along a street is included in the map information, on the display 313. As illustrated in Fig. 11, if there is no lot number along a street, no lot number is displayed and a blank 1101 is displayed.

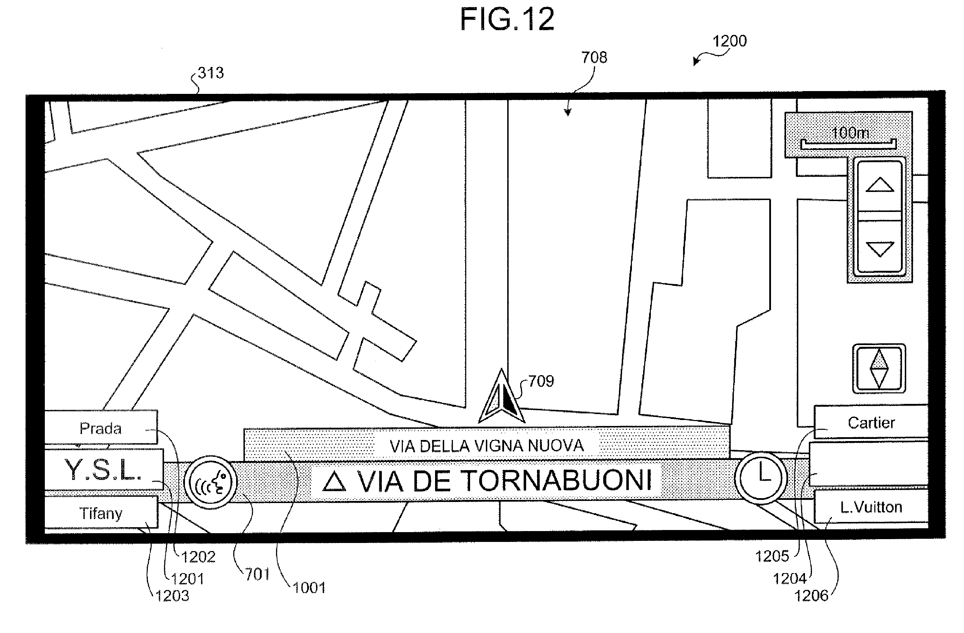

Fig. 12 is a screen example (Part 6) of one example of the display screen. A display screen 1200 illustrated in Fig. 12 is displayed when information related to establishments along a street is included in the map information on the display 313. On the display screen 1200, information indicating a name of an establishment 1201 to 1206 is displayed. Displayed on the display screen 1200 is the map 708 of the same place that is displayed on the display screen 1100 in Fig. 11. As with the screen 1100, if there is no information corresponding to an establishment along a street, a blank 1204 is displayed.

The information related to establishments is not limited to information indicating a name of facilities 1201 to 1206, and for example, the information may indicate the type of establishment (restaurant, clothing store, home improvement retailer, pet store, etc.).

Omitted from the figure, if a map of a region in Japan is to be used, although Japan employs a district based method of address assignment, based on map information, a display screen such as the display screen 1200 illustrated in Fig. 12 can be displayed on the display 313. If the street along which a vehicle is traveling is a well known street such as "KANJO ROUTE 8" or "KOSHU KAIDO", the street name may be displayed as the name information 701. For national roads, prefecture roads, etc., for example, "KOKUDO ROUTE 1" may be displayed as the name information 701.

Furthermore, in this case, for example, the location for the real-time lot number information 702 on the display screen 700 in Fig. 7 displays "NISHI SHINJUKU 1 CHOME". And, for example, the location for the approaching lot number information 704 in the display screen 700 of Fig. 7 displays "NISHI SHINJUKU 3 CHOME" while the location for the passed lot number information 706 displays "SHINJUKU 3 CHOME".

As mentioned above, according to the navigation apparatus 300 of the example, the name information 701 is displayed on the display 313; and the real-time lot number information 702, 703, the approaching lot number information 704, 705, and the passed lot number information 706, 707 can be displayed on the display 313 following the real-time position.

Therefore, the navigation apparatus 300 can display a sequence of lot numbers along a street in an easy to understand manner on the display 313 for regions where addresses are assigned according to a street based method, even when a destination is not set. As a result, a driver can safely operate the vehicle with peace of mind in a region where addresses are assigned according to a street based method.

Namely, the information display apparatus 100 enables a driver to reach a destination without anxiety. Furthermore, distractions that interfere with driver concentration during vehicle operation, such as gazing at a display screen or manipulation of the navigation apparatus, can be reduced, thereby contributing to safer driving.

Moreover, as illustrated in Fig. 7, the navigation apparatus 300 can, by the display of the real-time lot number information 702, 703, the approaching lot number information 704, 705, and the passed lot number information 706, 707, display a sequence of lot numbers along a street in an easy to understand manner.

Further, as illustrated in Fig. 8, the sequence of lot numbers along a street can be displayed in an easy to understand manner while reducing the amount of information displayed on the display 313, by displaying the real-time lot number information 703, the approaching lot number information 705, and the passed lot number information 707. As a result, distractions that interfere with driver concentration during vehicle operation can be reduced, thereby contributing to safer driving.

In addition, according to the navigation apparatus 300 of the example, the name information 701 is displayed on the display 313, while the real-time lot number information 702, 703, the approaching lot number information 704, 705, and the passed lot number information 706, 707 that are calculated based on the distance between two points that sandwich the real-time position and the real-time position can be displayed on the display 313, following to the real-time position.

As such, compared to the case in which information indicating all of the lot number group along a street is stored, the navigation apparatus 300 can reduce the required storage capacity of the optical disk 307 for storing information indicating lot number groups along a street while displaying the sequence of lot numbers along a street in an easy to understand manner.

As such, a driver is able to travel with peace of mind about a region having road-based address assignments, independent of the capacity of the recording medium, such as the optical disk 307, etc.

Further, according to the navigation apparatus 300 of the example, the name information 701 is displayed on the display 313 while the real-time lot number information 702, 703, the approaching lot number information 704, 705, and the passed lot number information 706, 707 that are calculated based on the distance from the reference point 601 to the real-time position can be displayed on the display 313 following the real-time position.

Moreover, without provision of a recording medium for recording information that indicates lot number groups along a street, the information display apparatus 100 is able to display a sequence of lot numbers along a street in an easy to understand manner. Hence, the display of information is independent of the capacity of a recording medium, and a user can navigate with peace of mind in a region having road-based address assignments. Further, when the moving object is a vehicle, a driver can safely operate the vehicle with peace of mind.

Furthermore, by the first example of the navigation apparatus 300, as information related to lot numbers preceding and following a lot number of a vicinity of the real-time position, the approaching lot number information 704, 705, and the passed lot number information 706, 707 can be displayed on the display 313. As such, the navigation apparatus 300 can display a sequence of lot numbers along a street in an easy to understand manner for a region where addresses are assigned according to a street based method, even if no destination is set. As a result, a driver can safely operate the vehicle with peace of mind in the region where addresses are assigned according to a street based method.

Additionally, according to the navigation apparatus 300 of the example, as illustrated in Fig. 10, the name information 701 and the cross street information 1001 can be displayed on the display 313. As such, the Information display apparatus 100 can display a sequence of lot numbers along a street in an easy to understand manner for a region where addresses are assigned according to a street based method, even if no destination is set.

As a result, a driver intuitively knows the sequence of lot numbers along a street and can safely travel with peace of mind in a region where addresses are assigned according to a street based method.

Further, according to the navigation apparatus 300 of the example, as illustrated in Fig. 10, the name information 701 and the cross street information 1001 can be displayed on the display 313. As such, guidance for cross streets can reliably be conducted. As such, a user, without setting a destination, can determine whether to turn right (or left) or go straight through the next intersection.

As described above, according to the navigation apparatus 300, with an easy to understand display, a driver can operate a vehicle safely and with peace of mind.

In addition, the information display method described in the present embodiment can be realized through the execution of a preinstalled program by a personal computer, work station or any other such computer. This program is stored on a hard disk, a flexible disk, a CD-ROM, an MO, a DVD, or any other such computer-readable recording medium, and is executed by a computer retrieving the program from the recording medium. Furthermore, this program may also be a transmission medium that can be distributed through a network such as the Internet.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

The present document incorporates by reference the entire contents of Japanese priority document, 2005-360496 filed in Japan on December 14, 2005.

## Claims

1. An information display apparatus (100) comprising:
a detecting unit (102) that detects a real-time position of a moving object;
an identifying unit (103) that identifies a street upon which the moving object is moving and a plurality of lot numbers assigned along the street, based on the real-time position; and
a display control unit (105) that controls a display unit (106) to display a name of the street, and to display, corresponding to a change of the real-time position, a vicinity lot number that is a lot number corresponding to a vicinity of the real-time position among the lot numbers, and information related to neighboring lot numbers that include a lot number preceding the vicinity lot number and a lot number following the vicinity lot number among the lot numbers.

2. The information display apparatus (100) according to claim 1, further comprising a calculating unit (104) that calculates the vicinity lot number based on a distance of an area corresponding to the lot numbers and the real-time position.

3. An information display apparatus (100) comprising:
a detecting unit (102) that detects a real-time position of a moving object;
an identifying unit (103) that identifies a street upon which the moving object is moving based on the real-time position;
a calculating unit (104) that calculates a vicinity lot number that is a lot number corresponding to a vicinity of the real-time position based on a distance from a reference point on the street to the real-time position; and
a display control unit (105) that controls a display unit (106) to display a name of the street, and to display, corresponding to a change of the real-time position, the vicinity lot number and information related to neighboring lot numbers that include a lot number preceding the vicinity lot number and a lot number following the vicinity lot number.

4. The information display apparatus (100) according to any one of claims 1 to 3, wherein the information related to the neighboring lot numbers indicates the neighboring lot numbers.

5. The information display apparatus (100) according to any one of claims 1 to 3, wherein the information related to the neighboring lot numbers indicates increase and decrease in a numeric value in the lot number relative to the vicinity lot number.

6. An information display method comprising:
detecting a real-time position of a moving object;
identifying a street upon which the moving object is moving and a plurality of lot numbers assigned along the street, based on the real-time position;
displaying a name of the street; and
displaying a vicinity lot number that is a lot number corresponding to a vicinity of the real-time position among the lot numbers, and information related to neighboring lot numbers that includes a lot number preceding the vicinity lot number and a lot number following the vicinity lot number among the lot numbers, corresponding to a change of the real-time position.

7. The information display method according to claim 6, further comprising calculating the vicinity lot number based on a distance of an area corresponding to the lot numbers and the real-time position.

8. An information display method comprising:
detecting a real-time position of a moving object;
identifying a street upon which the moving object is moving based on the real-time position;
calculating a vicinity lot number that is a lot number corresponding to a vicinity of the real-time position based on a distance from a reference point on the street to the real-time position;
displaying a name of the street; and
displaying the vicinity lot number and information related to neighboring lot numbers that include a lot number preceding the vicinity lot number and a lot number following the vicinity lot number, corresponding to a change of the real-time position.

9. The information display method according to any one of claims 6 to 8, wherein the information related to the neighboring lot numbers indicates the neighboring lot numbers.

10. The information display method according to any one of claims 6 to 8, wherein the information related to the neighboring lot numbers indicates increase and decrease in a numeric value in the lot number relative to the vicinity lot number.

11. An information display program that causes a computer to execute the information display method according to claim 6 or 8.

12. A computer-readable recording medium that stores the program according to claim 11.
